# EUROPEAN PATENT APPLICATION

(11) **EP 2 503 831 A2**
(43) Date of publication of application: **26.09.2012**
(21) Application number: 11170373.2
(22) Date of filing: 17.06.2011
(51) Int. Cl.: H04W 52/42, H04B 7/04, H04W 52/24

(54) **Power management method for use in a wireless network system**

(30) Priority: 23.03.2011 TW 100109853
(71) Applicant: Acer Incorporated, New Taipei City 221 (TW)
(72) Inventor: Cheng, Tsung-Yo, 221 New Taipei City (TW)
(74) Representative: Becker Kurig Straus

(57) **Abstract**

Between a user equipment and a base station in a wireless network system, a plurality of data links are simultaneously established for communication. The amounts of power for respectively maintaining the data links are adjusted according to the transmission quality of each corresponding data link, so that the data link with better transmission quality may receive more resource for improving the overall data throughput of the data links.

## Description

### Field of the Invention

The present invention is related to a power management method for improving data throughput of a wireless network system according to the pre-characterizing clause of claim 1.

### Background of the Invention

Communication technologies commonly adopted in current wireless network systems include CDMA (code division multiple access), TD-SCDMA (time division synchronous code division multiple access), WiMAX (worldwide interoperability for microwave access), UMB (ultra mobile broadband), LTE (long term evolution), or LTE-A (Long Term Evolution-Advanced).

A wireless network system normally performs power management by adjusting the output power of a user equipment. For example, open loop power control is a power management scheme in which the user equipment is configured to detect and adjust its output power to a specified value suitable for transmission. Closed loop power control is a power management scheme in which a base station is configured to detect and control the output power of the user equipment.

Since the user equipment at client side normally communicates with a single server base station/cell at one same time in most wireless network systems, current standards only specify the power control scheme for single-channel communication. However, multi-channel communication may be performed in LTE-A systems using at least one carrier component when communicating with at least one cell/access point, such as coordinated multipoint transmission/reception (CoMP) or multiple input multiple output (MIMO), relay deployment. In such a wireless network system providing multiple data links, the carrier aggregation, cell coverage, cell inter-distance and interference control of each data link may vary. Therefore, current power control schemes specified for single data link may not be suitable for such multi-channel communication.

### Summary of the Invention

This in mind, the present invention aims at providing a power management method for improving data throughput of a wireless network system.

This is achieved by a power management method according to claim 1. The dependent claims pertain to corresponding further developments and improvements.

As will be seen more clearly from the detailed description following below, the claimed power management method for use in a wireless network system includes providing a first power for establishing a first data link between a user equipment and a base station; providing a second power for establishing a second data link between the user equipment and the base station; determining a transmission quality of the first data link and a transmission quality of the second data link; and adjusting the first power and the second power so that the first power is larger than the second power if it is determined that the transmission quality of the first data link is better than the transmission quality of the second data link.

### Brief Description of the Drawings

In the following, the invention is further illustrated by way of example, taking reference to the accompanying drawings. Thereof
FIG. 1 is a diagram illustrating a wireless network system according to the present invention;
FIG. 2 is a flowchart illustrating the operation of the wireless network system according to the present invention; and
FIG. 3 is a diagram illustrating a power management method according to the present invention.

### Detailed Description

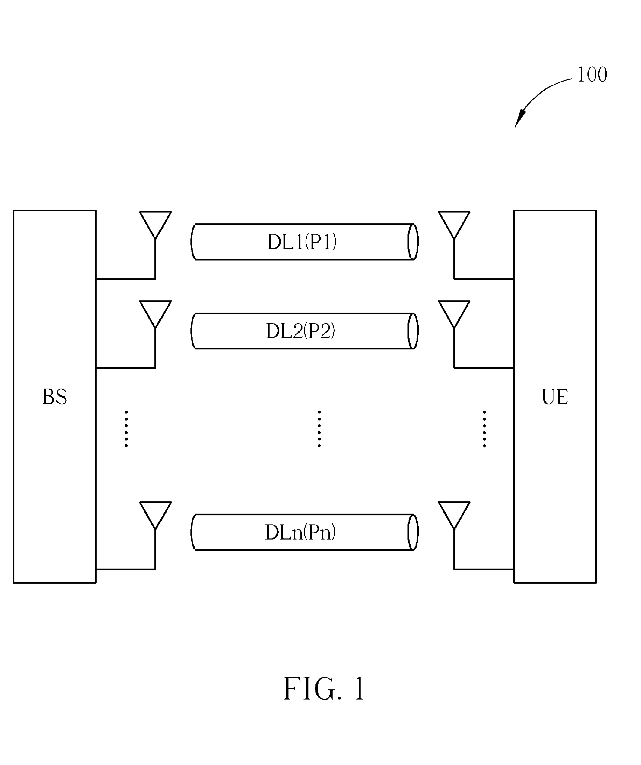

FIG. 1 is a diagram illustrating a wireless network system 100 according to the present invention. The wireless network system 100 includes a user equipment UE and a base station BS, between which multiple data links DL1~DLn may be established for intercommunication. P1~Pn represent the power required for maintaining the data links DL1~DLn, respectively.

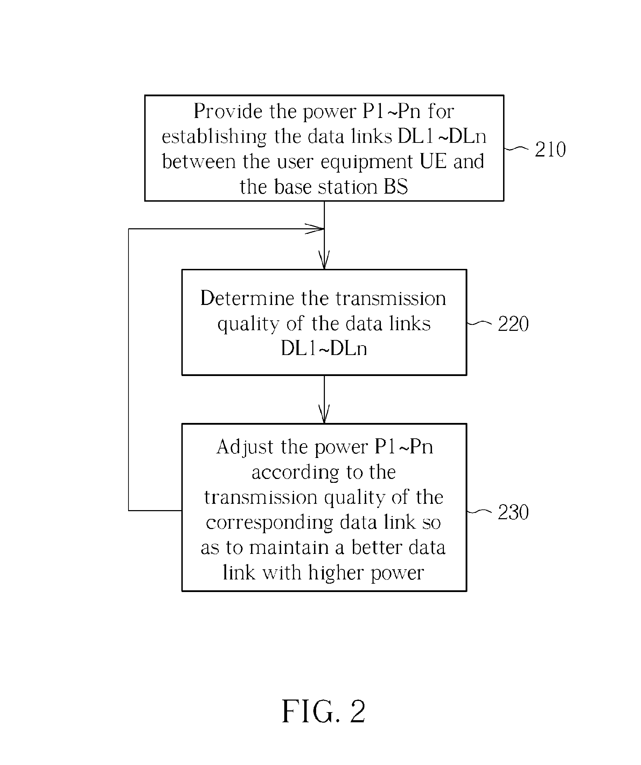

FIG. 2 is a flowchart illustrating the operation of the wireless network system 100 according to the present invention. The flowchart in FIG. 2 includes the following steps:
- Step 210:: provide the power P1~Pn for establishing the data links DL1~DLn between the user equipment UE and the base station BS; execute step 220.
- Step 220:: determine the transmission quality of the data links DL1~DLn; execute step 230.
- Step 230:: adjust the power P1~Pn according to the transmission quality of the corresponding data link so as to maintain a better data link with higher power; execute step 220.

When executing step 210 in uplink mode, data is transmitted from the user equipment UE, which provides the power P1~Pn for maintaining the data links DL1~DLn, to the base station BS. When executing step 210 in downlink mode, data is transmitted from the base station BS to the user equipment UE which provides the power P1~Pn for maintaining the data links DL1~DLn.

In step 220, the user equipment UE may determine the transmission quality of the data links DL1~DLn. In an embodiment of the present invention, the user equipment UE is configured to measure the data throughput of each data link directly. If the data throughput of the data link DL1 is larger than that of the data link D2, it can be determined that the data links DL1 has better transmission quality than the data link DL2. In another embodiment of the present invention, the user equipment UE is configured to measure parameters of each data link, such as BLER (block error rate), BER (bit error rate), QoS (quality of service) or TBS (transport block size). If the parameter of the data link DL1 is better than that of the data link D2, it can be determined that the data links DL1 has better transmission quality than the data link DL2.

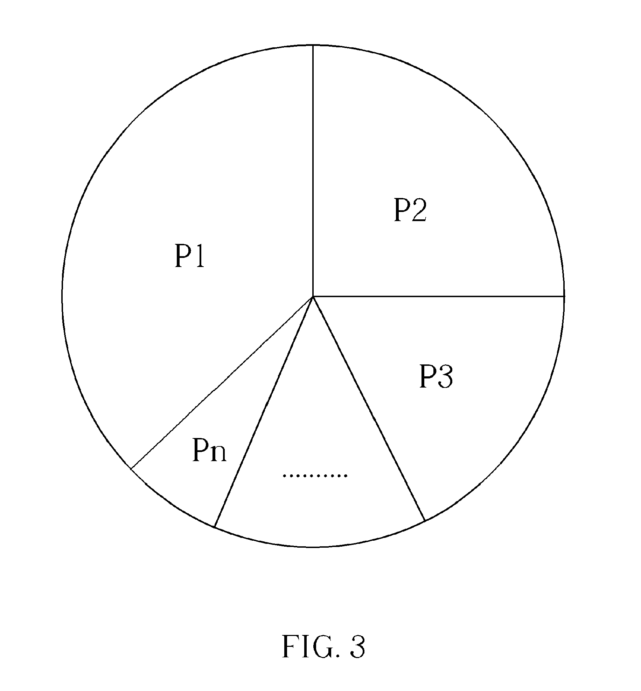

As depicted in FIG. 3, the user equipment UE may adjust corresponding power P1~Pn according to the transmission quality of the data links DL1~DLn when executing step 230 in uplink mode. For example, when it is determined in step 220 that the relationship of data link quality is DL1>DL2>...>DLn, the user equipment UE may adjust it output power in step 230 so that P1>P2>...>Pn. Therefore, more resources may be allocated to maintain the better data link.

In downlink mode, the user equipment UE is configured to send a TPC (transport power control) signal according to the signal-to-interference ratio (SIR) of each data link, thereby informing the base station BS of the required power for maintaining each data link. If an estimated signal-to-interference ratio SIR_{ESTIMATE} of a specific data link is larger a target signal-to-interference ratio SIR_{TARGET}, the user equipment UE may instruct the base station BS to lower the power for maintaining the specific data link (power down). If the estimated signal-to-interference ratio SIR_{ESTIMATE} of the specific data link is smaller than the target signal-to-interference ratio SIR_{TARGET}, the user equipment UE may instruct the base station BS to increase the power for maintaining the specific data link (power up). Therefore, when executing step 230 in downlink mode, the user equipment UE may adjust corresponding target signal-to-interference ratios SIR_{TARGET1}~SIR_{TARGETn} according to the transmission quality of the data links DL1~DLn. For example, when it is determined in step 220 that the relationship of data link quality is DL1>DL2>...>DLn, the user equipment UE may adjust each target signal-to-interference ratio so that SIR_{TARGET1}>SIR_{TARGET2}>...>SIR_{TARGETn}. Therefore, more resources may be allocated to maintain the better data link.

In wireless network systems, a slight downgrade in transmission quality may require resending data which largely lowers the overall data throughput. On the other hand, data throughput of wireless data link largely increases with slight improvement in transmission quality. In the present invention, the power for maintaining each data link is adjusted according to the transmission quality of the corresponding data link. Therefore, more resources may be allocated to maintain the better data link, thereby improving the overall data throughput of all data links.

## Claims

1. A power management method for use in a wireless network system, comprising:
providing a first power for establishing a first data link between a user equipment and a base station;
providing a second power for establishing a second data link between the user equipment and the base station;
determining a transmission quality of the first data link and a transmission quality of the second data link;
**characterized by**
adjusting the first power and the second power so that the first power is larger than the second power if it is determined that the transmission quality of the first data link is better than the transmission quality of the second data link.

2. The power management method of claim 1, further **characterized by**:
the user equipment providing the first power for maintaining the first data link and providing the second power for maintaining the second data link when data is transmitted from the user equipment to the base station in an uplink mode; and
the user equipment adjusting the first power and the second power so that the first power is larger than the second power if the transmission quality of the first data link is better than the transmission quality of the second data link.

3. The power management method of claim 1, further **characterized by**:
the base station providing the first power for maintaining the first data link and providing the second power for maintaining the second data link when data is transmitted from the base station to the user equipment in a downlink mode; and
the user equipment adjusting a first target signal-to-interference ratio of the first data link and a second target signal-to-interference ratio of the second data link so that the first target signal-to-interference ratio is larger than the second target signal-to-interference ratio if the transmission quality of the first data link is better than the transmission quality of the second data link.

4. The power management method of claim 3, further **characterized by**:
detecting a first estimated signal-to-interference ratio corresponding to a current transmission status of the first data link;
the user equipment sending a transport power control signal for instructing the base station to lower the first power if the first estimated signal-to-interference ratio is larger than the first target signal-to-interference ratio; and
the user equipment sending the transport power control signal for instructing the base station to increase the first power if the first estimated signal-to-interference ratio is smaller than the first target signal-to-interference ratio.

5. The power management method of claim 1, further **characterized by**:
detecting block error rate, bit error rate, quality of service or transport block size of the first data link and the second data link in order to determine the transmission quality of the first data link and the transmission quality of the second data link.
